# EUROPEAN PATENT APPLICATION

(11) **EP 1 791 329 A1**
(43) Date of publication of application: **30.05.2007**
(21) Application number: 05783287.5
(22) Date of filing: 15.09.2005
(51) Int. Cl.: H04M 1/02, G03B 21/00

(54) **ELECTRONIC APPARATUS**

(30) Priority: 17.09.2004 JP 2004271786; 17.09.2004 JP 2004271788
(71) Applicant: NIKON CORPORATION, Tokyo 100-8331 (JP)
(72) Inventor: NOZAKI, Hirotake, c/o NIKON CORPORATION, Tokyo 100-8331 (JP); NITTA, Keiichi, c/o NIKON CORPORATION, Tokyo 100-8331 (JP)
(74) Representative: Walaski, Jan Filip
(86) International application number: PCT/JP2005/017049
(87) International publication number: WO 2006/030862

(57) **Abstract**

An electronic device includes a projector device that projects an image formed by an optical image formation element via a projection optical system towards a projection surface external to a body of the electronic device; and the projector device projects the image while determining an orientation of the projection light flux, so that neither in a first placement method, in which the electronic device is placed with a first surface of the body being downwards upon a plane upon which the electronic device and the projection surface are placed, nor in a second placement method in which the electronic device is placed with a second surface of the body that is different from the first surface being downwards, is the image projected from the projector device intercepted by the plane.

## Description

### TECHNICAL FIELD

The present invention relates to an electronic device incorporating a projector device which projects information such as images or text or the like.

### BACKGROUND ART

An electronic device in which a projector is mounted in a portable telephone device or the like is known (refer to Patent Reference #1 and #2). With the portable telephone device with incorporated projector described in Patent Reference #1, in a state in which a folding lid, provided to the portable telephone device and which can be folded for storage, is opened up, an image in a concave surface reflecting mirror provided in the lid is projected by a projector. With the portable telephone device with incorporated projector described in Patent Reference #2, information can be projected upon the palm of the hand of the user himself while conversing with a conversational partner, or can be projected upon a wall surface while conversing.

Patent Reference #1: Japanese Laid-Open Patent Publication 2001-217908.
Patent Reference #2: Japanese Laid-Open Patent Publication 2000-236375.

### DISCLOSURE OF THE INVENTION

### PROBLEMS TO BE SOLD BY THE INVENTION

When the situation is considered in which the portable telephone device with incorporated projector described above is directly placed upon some stand and information is projected upon a wall surface by the projector, it may be expected that a portion of the projected image may be projected upon the stand, so that the entire projected image is not projected upon the wall surface. This situation can the more easily become a problem, the more compact the portable telephone device with incorporated projector becomes, and the closer the projection optical system of the projector comes to the placement surface. In particular, in the case of a device like the portable telephone device with incorporated projector described above, a plurality of types of placement method may be considered as methods for placing the portable telephone device upon the stand, and it has been necessary to solve the problem described above for each of these placement methods.

Furthermore, in Patent Reference #1, the question of the relationship between the orientation of an image which is being displayed upon an LCD for information display which is provided to the portable telephone device separately from the above described projector, and the orientation of an image which is being projected by the projector, is not discussed; it is supposed that, according to the relationship between the orientation of the displayed image and that of the projected image, sometimes it will be difficult to see themboth together.

Moreover, irrespective of whether or not an LCD for information display is present, it is desirable for the image projected by the projector to be projected in an orientation in which it can easily be seen by the viewer.

### MEANS FOR SOLVING THE PROBLEMS

According to the fist aspect of the invention, an electronic device, comprises: a projector device that projects an image formed by an optical image formation element via a projection optical system towards a projection surface external to a body of the electronic device, wherein: the projector device projects the image while determining an orientation of a projection light flux, so that neither in a first placement method, in which the electronic device is placed with a first surface of the body being downwards upon a plane upon which the electronic device and the projection surface are placed, nor in a second placement method in which the electronic device is placed with a second surface of the body that is different from the first surface being downwards, is the image projected from the projector device intercepted by the plane.
According to the second aspect of the invention, in an electronic device according to the first aspect, it is preferred that the orientation of the projection light flux is determined so that, both in the first placement method and in the second placement method, a center line of the projection light flux faces upward relative to a surface parallel to the plane.
According to the third aspect of the invention, in an electronic device according to the first aspect, it is preferred that the orientation of the projection light flux is determined so that an edge portion of the projection light flux does not protrude from either the first surface or the second surface of the electronic device.
According to the fourth aspect of the invention, in an electronic device according to the first aspect, it is preferred that the orientation of the projection light flux is determined so that, both in the first placement method and in the second placement method, an orientation of projection towards the projection surface of a lower edge of the projection light flux faces in the same direction as a surface parallel to the plane, or above the direction.
According to the fifth aspect of the invention, in an electronic device according to the first aspect, it is preferred that the orientation of the projection light flux is determined so that, when the projector device has projected the image towards the projection surface that is disposed within a range of projection distance in which a focal state of the image upon the projection surface is kept appropriate, both in the first placement method and in the second placement method, the image is not intercepted by the plane, irrespective of a position of arrangement of the projection surface within the range.
According to the sixth aspect of the invention, in an electronic device according to the first aspect, it is preferred that the orientation of the projection light flux is determined so that, when the projector device has projected the image upon the projection surface that is disposed at a position within a range in which a focal state of the image upon the projection surface is kept appropriate, and at a maximum projection distance, both in the first placement method and in the second placement method, the image is not intercepted by the plane.
According to the seventh aspect of the invention, an electronic device according to the first aspect, may further comprise: an actuation member that adjusts the orientation of the projection light flux, and wherein: both in the first placement method and in the second placement method, the orientation of the projection light flux in which the image projected from the projector device is not intercepted by the plane, is a default state.
According to the eighth aspect of the invention, an electronic device according to any one of the first through seventh aspect may further comprise: a correct unit that, both in the first placement method and in the second placement method, corrects trapezoidal deformation upon the projection surface of the image projected from the projector device with the same correction characteristics.
According to the ninth aspect of the invention, in an electronic device according to the eighth aspect, it is preferred that the correct unit further performs correction by varying the correction characteristics for trapezoidal deformation upon the projection surface, so that, in the first placement method and in the second placement method, the correction characteristics become different.
According to the tenth aspect of the invention, in an electronic device according to any one of the first through ninth aspect, it is preferred that members that face downwards during the placement are provided to both the first surface and the second surface.
According to the eleventh aspect of the invention, in an electronic device according to any one of the first through tenth aspect, it is preferred that at least the optical image formation element is adapted so as to be able to rotate about an axis which is substantially parallel to an optical axis of a projection optical system.
According to the twelfth aspect of the invention, an electronic device according to the eleventh aspect may further comprise: a rotation drive unit which rotationally drives at least the optical image formation element, according to a type of information to be projected and the placement method for the electronic device.
According to the thirteenth aspect of the invention, an electronic device according to any one of the first through tenth may further comprise: a projected image rotation unit which forms an image whose orientation has been rotated by the optical image formation element; and wherein: the projected image rotation unit rotates the orientation of the image according to at least either one of a type of information to be projected, and the placement method for the electronic device.
According to the fourteenth aspect of the invention, an electronic device according to any one of the first through tenth aspect may further comprise: a display device of which a display surface is arranged upon the body of the electronic device; and at least one of a projected image rotation unit that have the optical image formation element form an image with an orientation of the image rotated, and a displayed image rotation unit that displays an image on the display device with an orientation of the image rotated.
According to the fifteenth aspect of the invention, an electronic device having a body comprises: a projector device fitted to the body, which projects an image formed by an optical image formation element towards a projection surface external to the body via a projection optical system; wherein: the projector device is adapted to be able, in a state in which the body is placed upon a placement surface, to rotate around an axis that is substantially parallel to an optical axis of the projection optical system.
According to the sixteenth aspect of the invention, in an electronic device according to the fifteenth aspect, it is preferred that the projector device is adapted to be capable of rotating in different directions around the substantially parallel axis.
According to the seventeenth aspect of the invention, in an electronic device according to the fifteenth aspect, it is preferred that the projector device further comprises a LED light source that has an illumination optical axis that is non-parallel to a rotation axis, and that illuminates an image formed upon the optical image formation element.
According to the eighteenth aspect of the invention, an electronic device according to the fifteenth aspect may further comprise: a rotation drive unit which rotationally drives the projector device, according to at least one of a type of information to be projected and an orientation in which the electronic device is placed.
According to the nineteenth aspect of the invention, an electronic device according to the twelfth or the eighteenth aspect may further comprise: a display device of which a display surface is provided upon the body of the electronic device; and wherein: the rotation drive unit rotationally drives the optical image formation device or the projector device, so as to make an orientation of the image projected by the projector device and an orientation of the image displayed by the display device coincide with one another.
According to the twentieth aspect of the invention, an electronic device comprises: a projector device that projects an image formed by an optical image formation element upon a projection surface; a display device of which a display surface is arranged upon a body of the electronic device; and at least one of a projected image rotation unit that electrically rotates an orientation of the image formed by the optical image formation element, and a displayed image rotation unit that electrically rotates an orientation of an image formed by the display device.
According to the twenty-first aspect of the invention, in an electronic device according to the fourteenth or the twentieth aspect, it is preferred that at least one of the projected image rotation unit and the displayed image rotation unit rotates an image formed by the optical image formation element, or an image formed by the display device, according to a type of information to be displayed by the projector device or by the display device, and an orientation in which the electronic device is placed.
According to the twenty-second aspect of the invention, in an electronic device according to the fourteenth or the twentieth aspect, it is preferred that at least one of the projected image rotation unit and the displayed image rotation unit rotates an image formed by the optical image formation element, or an image formed by the display device, so as to make an orientation of the image projected by the projector device and an orientation of the image displayed by the projector device coincide with one another.
It should be understood that it would also be acceptable to replace the above described projector device by a projector means, and to replace the compensation unit by a compensation means, the optical image formation element by an optical image formation means, the rotation drive unit by a rotation drive means, the projected image rotation unit by a projected image rotation means, the display device by a display means, and the displayed image rotation unit by a displayed image rotation means.

### ADVANTAGEOUS EFECT OF THE INVENTION

Since the present invention has the structure explained above, it provides the following beneficial effects.
With the electronic device incorporating a projector device according to the present invention, even if the first surface of the electronic device is placed downwards upon the plane upon which the electronic device and the projection surface are placed, or even if the second surface of the electronic device is placed downwards, it still becomes possible for the image to be projected without interference by the plane. Due to this, it is possible to obtain the desired projected image with various different placement methods.
Furthermore since, according to another aspect of the present invention, it is made possible to rotate the projector device included in the electronic device around an axis which is substantially parallel to the optical axis of the projection optical system, accordingly it becomes possible to obtain a projected image in the desired orientation simply and easily. In particular, it is possible to obtain a projected image of the desired orientation with the desired placement method.
Furthermore since, according to another aspect of the present invention, it is made possible to rotate the projector device of the electronic device which includes a projector device and a display device around an axis which is substantially parallel to the optical axis of the projection optical system, accordingly it is possible to make the orientation of, for example, the image projected by the projector device and the orientation of the image displayed by the display device coincide with one another.
Furthermore since, according to another aspect of the present invention, with this electronic device including a display device and a projector device, it is arranged to create or display an image having been rotated with at least one of the optical image formation element and the display device of the projector device, accordingly it is possible to make the orientation of, for example, the image projected by the projector device and the orientation of the image displayed by the display device coincide with one another.

### BRIEF DESCRIPTION OF THE DRAWINGS

Fig. 1 is a perspective view of a portable telephone device with incorporated projector according to an embodiment of the present invention;
Fig. 2 is a block diagram for explanation of the structure of this portable telephone device with incorporated projector;
Fig. 3(a) is a figure showing a screen upon which this portable telephone device with incorporated projector, laid in a vertical position, is projecting an image, seen straight on, and Fig. 3(b) is a figure as seen from the right side of the screen;
Fig. 4(a) is a figure showing a screen upon which this portable telephone device with incorporated projector, laid in a horizontal position, is projecting an image, seen straight on, and Fig. 4(b) is a figure as seen from the right side of the screen;
Fig. 5 is an enlarged view of a projector module;
Fig. 6 is a flow chart for explanation of the flow of rotation processing by the projector module;
Fig. 7 is a figure for explanation of the structure of a liquid crystal panel, when a projected image is being rotated by performing processing upon the image data;
Fig. 8 is a figure for explanation of an example in which an image which is a screen in portrait format is formed upon a landscape format rectangular region;
Fig. 9 is a figure for explanation of this image of a screen in portrait format which has been formed upon a portrait format rectangular region; and
Fig. 10(a) is a figure showing an image which is being displayed upon a main liquid crystal display unit in the state of Fig. 3(a), while Fig. 10(b) is a figure showing an image which is being projected upon a screen in the state of Fig. 3(a).

### BEST MODE FOR CARRYING OUT THE INVENTION

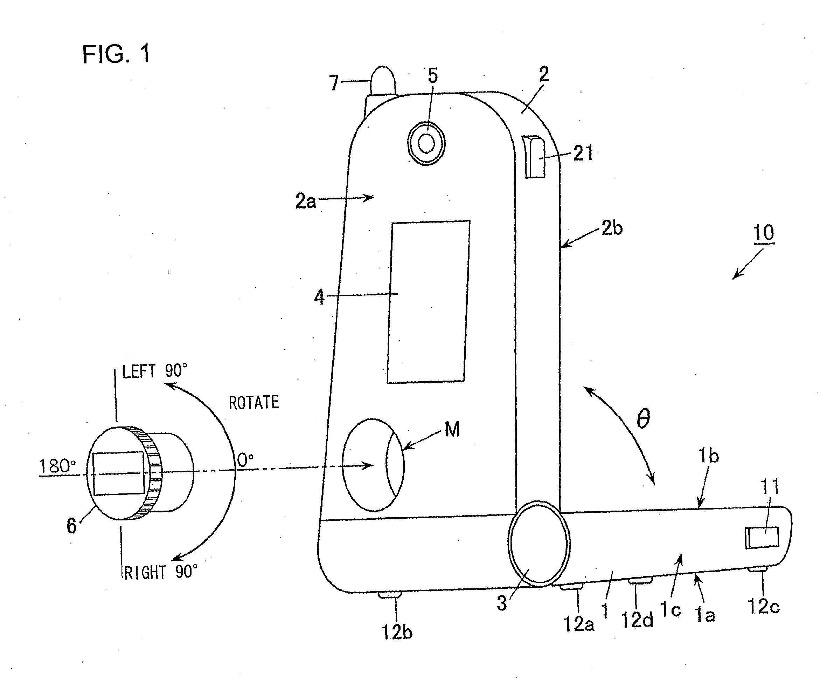

Preferred embodiments for implementation of the present invention will now be explained with reference to the drawings. Fig. 1 is a perspective view of a portable telephone device with incorporated projector 10 which can be used while being hand-held, according to an embodiment of the present invention. In this portable telephone device with incorporated projector 10 of Fig. 1, a body comprising an actuation section 1 and a display section 2 is supported by a rotatable folding hinge unit 3, with this folding hinge unit 3 being adapted so as to fold freely by rotating about its center. A click mechanism (not shown in the figures) is provided to the folding hinge unit 3, so that the relative angle θ between the actuation section 1 and the display section 2 can be positioned, for example, to a 90° position and to a 150° position. The 90° position corresponds to an attitude for projection by the projector unit, while the 150° position corresponds to an attitude for conversation with the telephone device.

Compact foot portions 12a - 12d are provided to the bottom surface 1a of the actuation section 1, so as to stabilize this portable telephone device with incorporated projector 10 when it has been laid upon a planar surface. A first actuation member 112 and the like which will be described hereinafter are provided upon the surface 1b of the actuation section 1 on the side of the display section 2, and a compact foot portion 11 is provided upon a side 1c of the actuation section 1. This compact foot portion 11 is adapted so that, when the portable telephone device with incorporated projector 10 is laid upon a planar surface with the side 1c facing downwards (i.e. is laid in a horizontal position) in the state in which the relative angle θ of the portable telephone device with incorporated projector 10 has been opened up to 90° as shown in Fig. 1 (i.e. the projection attitude), then the telephone device with incorporated projector 10 is laid stably upon three points: this compact foot portion 11, and also the folding hinge unit 3 and a compact foot portion 21 which is provided upon the display section 2.

A main liquid crystal unit 204 which will be described hereinafter is disposed upon the surface 2b of the display section 2 on the side of the actuation section 1, and a sub liquid crystal display unit 4 is disposed upon the outside surface 2a of the display section 2. A photographic lens 5 of a camera and a projector module 6 are also both disposed upon the surface 2a of the display section 2. This projector module 6 is made in a cylindrical shape and fits into a round hole M which is provided upon the surface 2a of the display section 2 so as to rotate freely therein, with a clickmechanism (not shown in the figures) being provided to click at a total of three spots: a fundamental position (taken as being 0°) shown in Fig. 1, and two positions in which the projector module 6 has been rotated at 90° from this fundamental position to orientations respectively on the left and the right with reference to that fundamental position.

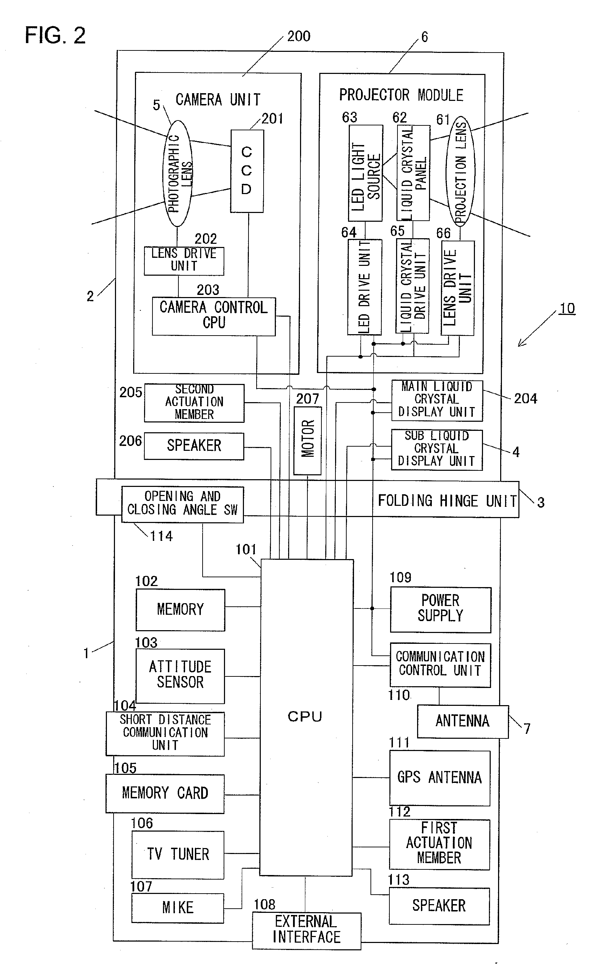

Fig. 2 is a block diagram for explanation of the structure of the portable telephone device with incorporated projector 10 of Fig. 1. In Fig. 2, on the side of the actuation section 1, there are provided a CPU 101, a memory 102, an attitude sensor 103, a short distance communication unit (circuit) 104, a TV tuner 106, a mike 107, an external interface (I/F) 108, a power supply 109, a communication control unit (circuit) 110, an antenna 7, a GPS antenna 111, the first actuationmember 112, a speaker 113, and an opening and closing angle switch (SW) 114; and a removable memory card 105 is also implemented.

To the display section 2, there are provided a camera unit 200, the projector module 6 (the projector unit), a second actuation member 205, a speaker 206, a motor 207, the main liquid crystal unit 204, and the sub liquid crystal unit 4.

Based upon a control program, the CPU 101, which is a controller, performs predetermined calculation and the like using signal inputted from various units incorporated in this portable telephone device with incorporated projector 10, and controls each of telephone device operation, camera operation, and projector operation by sending control signals to various units of this portable telephone device with incorporated projector 10. It should be understood that this control program is stored in a non-volatile memory (not shown in the figures) within the CPU 101.

The memory 102 is used as a working memory for the CPU 101. The attitude sensor 103 detects the attitude of this portable telephone device with incorporated projector 10, and sends its detection signal to the CPU 101. Due to this, the CPU 101 acquires top and bottom information which specifies the top and the bottom of an image during photography (including information for identifying photography with the camera in the vertical position and photography with the camera in the horizontal position), and, when the projector is being used, decides whether it is placed in the vertical position as shown in Fig. 1, or is placed in the horizontal position with the compact foot portions 11 and 21 and the folding hinge unit 3 downwards.

The short distance communication unit 104 may comprise, for example, an infrared radiation communication circuit, and transmits and receives data to and from an external device upon command by the CPU 101. The TV tuner 106 receives a television broadcast upon command by the CPU 101. The CPU 101 displays the received image upon the main liquid crystal display unit 204, and replays the received audio upon the speaker 206. The memory card 105 comprises a non-volatile memory, and, upon command by the CPU 101, it is possible to write, store, and read out data such as, for example, image data outputted by the camera unit 200, images and audio data outputted by the TV tuner 106, and the like.

The mike 107 converts audio which has been captured into an electrical signal and sends it to the CPU 101 as an audio signal. This audio signal is recorded in the memory card 105 during sound recording, and is sent to the communication control unit 110 during conversation. The external interface 108 transmits and receives data to and from an external device via a cable or a cradle, not shown in the figures, upon command by the CPU 101.

The speaker 113 replays the audio of an audio signal outputted from the CPU 101. The first actuation member 112 includes dial buttons for a telephone device and the like, and sends actuation signals to the CPU 101 corresponding to the buttons which are pressed. The GPS antenna 111 receives signals from GPS satellites, and sends the received data to the CPU 101. The CPU 101 is adapted to be able to calculate positional information using this data received from the GPS antenna 111. The communication control unit 110 includes a wireless transmission and reception circuit, and performs communication with other telephone devices via a base station not shown in the figures, upon command by the CPU 101. This communication control unit 110 is adapted so as to be able to transmit and receive, not only telephone audio, but also image data which has been photographed by the camera unit 200, image data for projection by the projector module 6, and the like. And the antenna 7 is a transmission and reception antenna for the communication control unit 110.

The power supply 109 may consist of, for example, a removable battery pack and a DC/DC conversion circuit or the like, and supplies the various sections within the portable telephone device with incorporated projector 10 with the electrical power which they require. The opening and closing angle SW 114 detects the rotational angle of the folding hinge unit 3, and sends an ON signal to the CPU 101 if it detects that the relative angle θ between the actuation section 1 and the display section 2 is 90° (the projection attitude), while it sends an OFF signal for any other than the angle described above. And the CPU 101 performs projection operation of the projector module 6 when it receives an ON signal, while it does not perform such projection operation when it receives an OFF signal.

The main liquid crystal display unit 204 displays information such as an image or text or the like upon a command from the CPU 101. The sub liquid crystal display unit 4 also displays information such as an image or text or the like upon a command from the CPU 101. The text information may be the operational state of the portable telephone device with incorporated projector 10, an actuation menu, the contents of a transmitted or received email, or the like. Furthermore, the main liquid crystal display unit 204 is adapted to be able to display the same image as the image which is being projected by the projector module 6. The second actuation member 205 includes a button or the like which is related to the displayed contents upon the main liquid crystal display unit 204, and sends an actuation signal to the CPU 101 according to this button being depressed. And the speaker 206 replays audio which is outputted from the CPU 101 as a sound signal, during the conversation attitude when the relative angle θ is 150°.

The camera unit 200 comprises the photographic lens 5, an image sensor 201, a lens drive unit (circuit) 202, and a camera control CPU 203 which is a controller. As the image sensor 201, a CCD or CMOS photographic element or the like may be used. The camera control CPU 203 drives and controls the image sensor 201 and the lens drive unit 202 upon a command from the CPU 101. Upon receipt of a zoom control signal from the camera control CPU 203, the lens drive unit 202 drives a zoom lens (not shown in the figures) which is incorporated in the photographic lens 5 to a tele side or to a wide side. The photographic lens 5 images an image of the object to be photographed upon the photographic surface of the image sensor 201. The camera control CPU 203 starts this photography upon the image sensor 201, and, after the end of photography, reads out an accumulated electric charge signal from the image sensor 201, and, after having performed predetermined signal processing thereupon, sends it to the CPU 101 as image data. It should be understood that, when image data which has been photographed by the camera unit 200 is to be transmitted, image data is sent from the CPU 101 to the communication control unit 110. Furthermore, when a photographic image is to be projected, image data is sent from the camera control CPU 203 via the CPU 101 to the projector module 6. In the CPU 101, which is an image processing circuit, trapezoidal deformation compensation (keystone compensation) processing is performed upon the image data to be projected by the projector module 6.

The projector module 6 comprises a projection lens 61, a liquid crystal panel 62, a LED light source 63, a LED drive unit (circuit) 64, a liquid crystal drive unit (circuit) 65, anda lens drive unit (circuit) 66. The LED drive unit 64 supplies electrical current to the LED light source 63 according to a LED drive signal which is outputted from the CPU 101. And the LED light source 63 illuminates the liquid crystal panel 62 at a brightness corresponding to the electrical current which is supplied.

The liquid crystal drive unit 65 generates a liquid crystal panel drive signal corresponding to the image data, and, by using this generated drive signal, drives the liquid crystal panel 62. In concrete terms, in the liquid crystal layer, a voltage is applied to each of the picture elements in correspondence to the image signal. The arrangement of the liquid crystal molecules changes in the liquid crystal layer to which voltage has thus been applied, and the optical transmittivity of this liquid crystal layer changes. By modulating the light from the LED light source 63 in this manner according to the image signal, the liquid crystal panel 62 creates an optical image.

Based upon a control signal outputted from the CPU 101, the lens drive unit 66 drives the projection lens 61 forwards and backward along a direction which is orthogonal with respect to the optical axis of the projection lens 61. Furthermore, by driving a focusing lens of the projection lens 61, the lens drive unit 66 is able to adjust the focus of the image upon a screen which has been placed within a predetermined projection distance range. The projection lens 61 projects the optical image which has been emitted from the liquid crystal panel 62 towards the screen or the like.

### Offsetting of the projected image

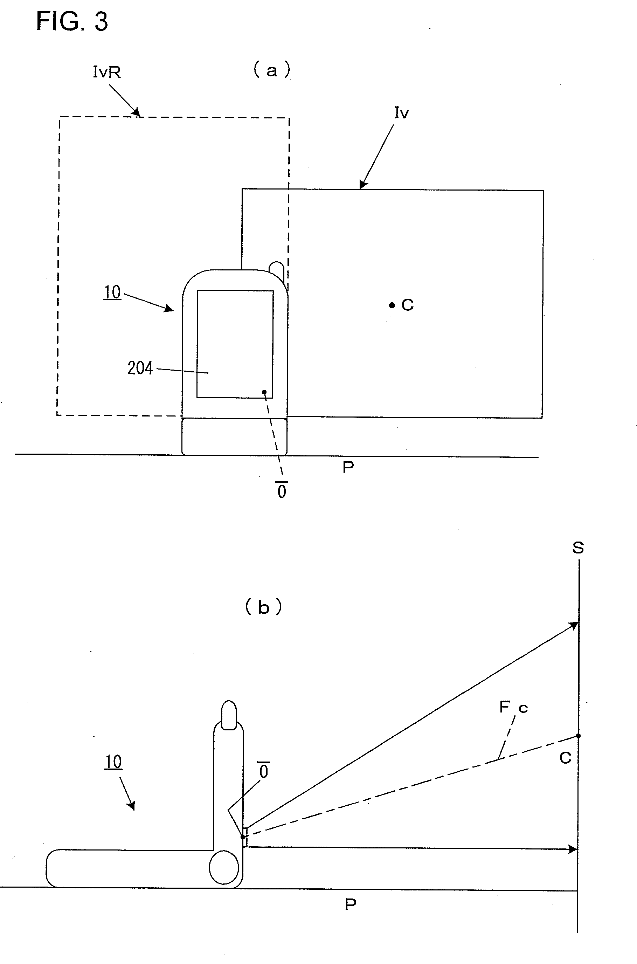

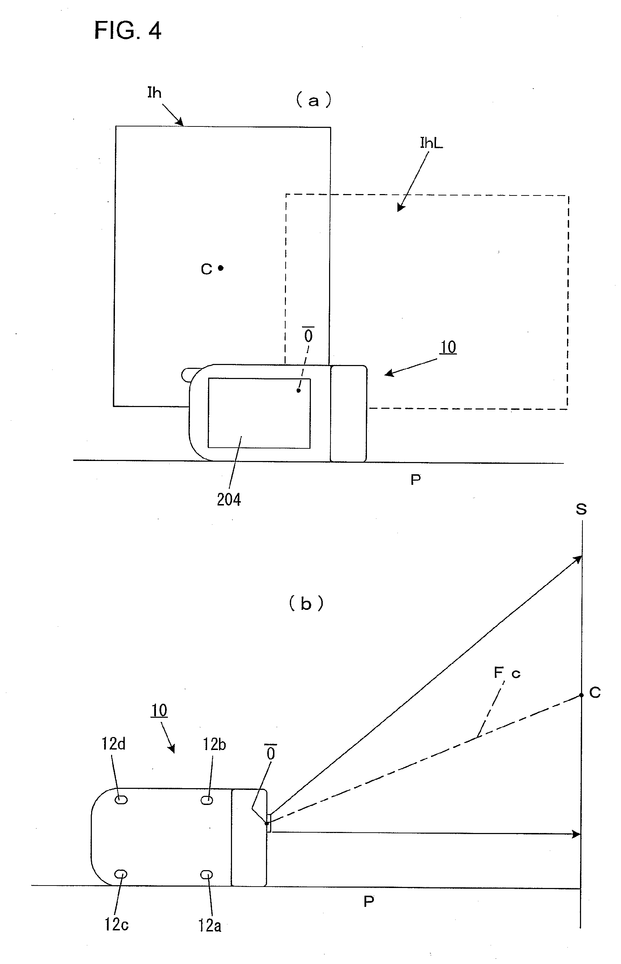

The image projection by the projector module 6 will now be described in detail. Fig. 3 is a figure for explanation of an image Iv which is projected upon a screen S which has been placed upon a plane surface P at a predetermined projection distance position from this portable telephone device with incorporated projector 10 which has been placed upon the plane surface P in the above described vertical position, with its projection lens 61 facing towards the screen. In Fig. 3 and Fig. 4 which will be described hereinafter, the portable telephone device with incorporated projector 10 is placed upon the plane P in the previously described projection attitude. The display surface of the main liquid crystal display unit 204 and the screen S (the projection surface) are set to an substantially parallel state, so that, at the same time, it is possible to perform visual confirmation from the direction straight on to the screen S. Fig. 3(a) is a figure in which the screen S is seen in a straight on orientation, while Fig. 3(b) is a figure in which the screen S is seen from its right side. The projected image is projected upon the screen S with at least the length of its one side magnified to be greater than the vertical or the horizontal dimension of the body of this portable telephone device with incorporated projector 10.

In Fig. 3 (a), the central point C of the projection ray bundle or the projection light flux of the projected image Iv is offset in the direction to the right from the center O of the aperture of the projector module 6. In other words, the left edge of the projection ray bundle is displaced more to the right, than a plane which corresponds to the horizontal position placement surface defined by the compact foot portions 11, 21 and the hinge 3. Furthermore, at the same time, the projected image Iv is offset in the upwards direction from the center O of the aperture of the projector module 6, so that this image Iv does not strike the plane P. In other words, the lower edge of the projection ray bundle is displaced more upwards than the plane P (the vertical position placement surface) which is defined by the compact foot portions 12a - 12d. It should be understood that the rotation position of the projector module 6 is set to 0°. Furthermore, the point C in the figure shows the center of the ray bundle which is projected (the center of the projected image Iv), and the line Fc which connects the aperture center O and the point C corresponds to the center line of the ray bundle.

Fig. 4 is a figure for explanation of an image Ih which is projected upon a screen S placed at the same projection distance as in the case of Fig. 3 from the portable telephone device with incorporated projector 10, which is in the projected image offset state shown in Fig. 3, and which has been placed upon the plane P in the above described horizontal position with its projection lens 61 facing towards the screen S. Fig. 4 (a) is a figure showing the screen S as seen straight on, and Fig. 4(b) is a figure showing the screen S as seen from the right side. The projected image is projected upon the screen S with at least the length of its one side magnified to be greater than the vertical or the horizontal dimension of the body of this portable telephone device with incorporated projector 10. In Fig. 4 (a), the central point C of the projection ray bundle of the projected image Ih is offset in the direction to the left from the center O of the aperture of the projector module 6, and also is offset more upwards than this center O of the aperture of theproj ectormodule 6, so that the projected image Ih does not strike the plane P. In other words, the lower edge of the projection ray bundle is displaced more upwards, than the plane P (the horizontal position placement surface) defined by the compact foot portions 11, 21 and the hinge 3. It should be understood that the rotation position of the projector module 6 is set to 0°. Furthermore, the point C in the figure shows the center of the ray bundle which is projected (the center of the projected image Ih), and the line Fc which connects the aperture center O and the point C corresponds to the center line of the ray bundle.

Since in this manner it is arranged for the projection to be performed so that, during placement in the vertical position, as shown in Fig. 3 (a), the lower edge of the projection ray bundle is higher than the plane P defined by the compact foot portions 12a ~ 12b (the vertical placement surface), and moreover the left edge of the projection ray bundle is offset more to the right than the plane which corresponds to the horizontal position placement surface defined by the compact foot portions 11, 21 and the hinge 3, during placement in the horizontal position as well, as shown in Fig. 4 (a), the lower edge of the projection ray bundle is projected so as to be offset more upwards than the plane defined by the compact foot portions 11, 21 and the hinge 3 (the horizontal position placement surface), accordingly it never happens that any portion of the projection ray bundle comes to be obstructed due to the orientation of the supposed placement, whichever it may be.

In other words, the orientation of the projection ray bundle is determined so that the end portion of the projection ray bundle, all the way until it arrives at the screen S which is at the predetermined projection distance position, is intercepted by neither the plane defined by the compact foot portions 12a - 12d (the vertical position placement surface), nor the plane defined by the compact foot portions 11, 21 and the hinge 3 (the horizontal position placement surface). It is desirable for the lower edge of the projection ray bundle to be determined so that the projection ray bundle is not intercepted by either the vertical position placement surface or the horizontal position placement surface, until the projection ray bundle arrives at the screen S which has been placed anywhere within the range from the shortest projection distance to the maximum projection distance to which the focal point of the projection lens 61 can be adjusted. The projector module 6 is kept at an appropriate focal state within the range described above, and is adapted so that its other predetermined optical performance is maintained. In other words, the lower edge of the projection ray bundle is determined so that the projection ray bundle is not intercepted by either the vertical position placement surface or the horizontal position placement surface, until the projection ray bundle arrives at the screen S which has been placed at, for example, a predetermined projection distance within the above described range such as the above described maximum projection distance or the like, or any projection distance within the above described range, or a projection distance which is greater than or equal to the above described shortest projection distance. Of course, if a projection lens 61 is employed whose focal point cannot be adjusted, then it is possible to use the same structure as that described above, within the projection distance range in which an appropriate focus state is maintained. It should be understood that, even though this projector module 6 is one in which this type of offset state is fixed, it would also be acceptable for this type of offset state to be the default state, and for the projector module to be one in which the orientation of the projection ray bundle can be adjusted. Here, determining the orientation of the projection ray bundle, is equivalent to determining the orientation of the center line or of the lower edge of the projection ray bundle, as previously described.

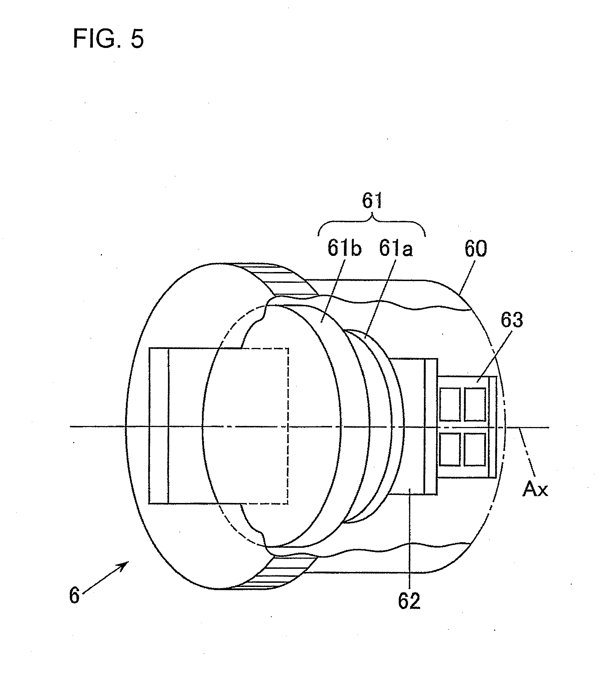

The offsetting of the projected image is performed by shifting the projection lens 61 with the above described lens drive unit 66 in a direction perpendicular to the optical axis of the projection lens 61. However, it would also acceptable to provide a structure in which the liquid panel 62 and the LED light source 63 were driven forwards and backwards in a direction perpendicular to the optical axis of the projection lens 61. In other words, it is possible to implement offsetting of the projected image by changing the relative positional relationship of the projection lens 61 and the liquid crystal panel 62 in a direction perpendicular to the optical axis of the projection lens 61. Even when the projected image is offset in this manner, the optical axis of the projection lens 61 remains substantially parallel to the illumination optical axis Ax (see Fig. 5) due to the LED light source 63. The amount of offsetting of the projected image may be fixed to the state shown in Figs. 3 and 4 or may be variable in the state shown in Figs. 3 and 4. In the latter case, it is desirable to set the offsetting amount, in the default state, to its value in the state shown in Figs. 3 and 4. Furthermore, when shifting some of the projection lens 61, the liquid crystal panel 62, and the LED light source 63 in the direction perpendicular to the optical axis of the projection lens 61, corresponding to this shifting, keystone compensation is performed for the display data which is being projected.

Simply by imparting an offset to the projected image as explained above, the projected image will be changed into the shape of a trapezoid. Thus, in order to compensate or correct the projected image back to rectangular, electronic keystone compensation is performed by image processing. As shown by way of example in Figs. 3 and 4, in this keystone compensation, if the optical axis of the projection lens 61 and the projection surface are perpendicular, compensation or correction is performed according to the same compensation characteristics or the correction characteristics when the portable telephone device with incorporated projector 10 is placed in the vertical position, and when it is placed in the horizontal position. As for the keystone compensation amount, an initial compensation value is stored in advance within the CPU 101 for compensating both the projected images Iv and Ih to square in the respective states of vertical position placement and horizontal position placement. The CPU 101 performs keystone compensation processing upon the image data to be projected from the projector module 6, based upon this initial compensation value. Rotation of the projected image

When data for a screen in portrait format is projected in the state shown in Figs. 3 (a) and 3 (b) in which the device is placed in the vertical position (with the projection screen being a landscape format screen), then the CPU 101 drives the motor 207, and rotates the projector module 6 through 90° in the rightwards direction in Fig. 1, so that an erect image IvR comes to be projected. This erect image IvR consists of the projected image Iv, rotated about the center O of the aperture (exactly, around a rotation axis which is substantially parallel to the optical axis of the projection lens 61). By substantially parallel, is meant that the angle between the rotation axis of the projector module 6, which includes the liquid crystal panel 62, and the optical axis of the projection lens 61, is less than or equal to 30°. The CPU 101 performs identification in the following manner to determine whether the contents of the screen to be displayed is the contents for a screen in landscape format or for a screen in portrait format. If the contents to be projected is the image which has been photographed by the camera unit 200, then the top and bottom information during photography is used. This top and bottom information during photography can be obtained from the output of the attitude sensor 103, and the top and bottom information obtained in this manner is stored in a predetermined region of the image data file. If the contents to be projected is something other than the image which has been photographed by the camera unit 200, such as text or the like, then the CPU 101 identifies whether this is the contents for a screen in landscape format or for a screen in portrait format, by using supplementary screen information data (for example screen aspect ratio information) which is included in the contents data, or by using type information of the application software with which the data for this contents was created

If, when the projector module 6 is rotated through 90° in the rightwards direction in Fig. 1, what is projected is not an erect image but rather is an inverted image, then the CPU 101 sends a command to the liquid crystal drive unit 65, and changes the liquid crystal panel drive signal so as to rotate the image generated upon the liquid crystal panel 62 through 180°, so that the image which is formed upon the liquid crystal panel 62 is reversed top and bottom. In this case as well, whether or not to rotate the image which is created upon the liquid crystal panel 62 is decided using the top and bottom information during photography. By doing this the top and bottom of the contents are automatically recognized, and an erect image is always projected, irrespective of the orientation in which the photographer originally held the portable telephone device with incorporated projector 10 during photography.

In the same manner, when data for a screen in landscape format is projected in the state shown in Figs. 4 (a) and 4 (b) in which the device is placed in the horizontal position (with the projection screen being a portrait format screen), then the CPU 101, which constitutes a drive circuit, drives the motor 207, and rotates the projector module 6 through 90° in the leftwards direction in Fig. 1, so that an erect image IhL comes to be projected. This erect image IhL consists of the projected image Ih, rotated about the center O of the aperture (exactly, around a rotation axis which is substantially parallel to the optical axis of the projection lens 61) . By substantially parallel, is meant that the angle between the rotation axis of the projector module 6, which includes the liquid crystal panel 62, and the optical axis of the projection lens 61, is less than or equal to 30°.

If, when the projector module 6 is rotated through 90° in the leftwards direction in Fig. 1, what is projected is not an erect image but rather is an inverted image, then the CPU 101 sends a command to the liquid crystal drive unit 65, and changes the liquid crystal panel drive signal so as to rotate the image generated upon the liquid crystal panel 62 through 180°, so that the image which is formed upon the liquid crystal panel 62 is reversed top and bottom. By doing this an erect image is always projected, irrespective of the orientation in which the photographer originally held the portable telephone device with incorporated projector 10 during photography.

Fig. 5 is an enlarged view of the projector module 6. In Fig. 5, the LED light source 63, the liquid crystal panel 62, and two lenses 61a, 61b which are comprised in the projection lens 61 are all contained within a cylinder member 60. In the state in which the projection lens 61 is not shifted in the direction perpendicular to the optical axis of the projection lens 61, the optical axis of the projection lens 61 coincides with the illumination optical axis Ax. It should be understood that the actuator (the lens drive unit 66) which drives the two lenses 61a, 61b forwards and backwards, the liquid crystal drive unit 65, and the LED drive unit 64 are omitted from this figure. When the projector module 6 is rotated, the liquid crystal panel 62 rotates around the optical axis Ax for illumination by, for example, the LED light source 63 as a center. Since, due to the rotation of the projector module 6, the liquid crystal panel 62 and the projection lens 61 are rotated in this manner, accordingly it is possible to rotate the projected image , as shown in Figs. 3 (a) and 4 (a) . It should be understood that the relative positional relationship between the projection lens 61, the liquid crystal panel 62, and the LED light source 63 is kept fixed, even though the projector module 6 rotates. By employing this type of structure it is possible, in a state in which the projection lens 61 has been shifted in the direction perpendicular to its optical axis, to project from the projection lens 61 the image which has been offset according to said shift orientation and shift amount. Furthermore, it would also be acceptable to arrange for the rotation of the projector module 6 which includes the liquid crystal panel 62 to be performed around, as a center, the optical axis of the projection optical system consisting of the projection lens 61 and so on, or around an axis which is substantially parallel thereto. Here, by substantially parallel, is meant that the angle between the rotation axis of the projector module 6 and the above described optical axis is less than or equal to 30°. It should be understood that, in this embodiment, the LED light source 63 is used as a light source, and its light emitting characteristic does not experience any influence due to gravity. Accordingly, it is possible to maintain the picture quality of the projected image even if the above described rotation is performed, without the light emitting characteristic of the illumination unit changing due to the influence of gravity, even if the structure is such that the optical axis of the illumination unit is not substantially parallel to the rotation axis of the projector module 6. By employing a structure in which the ray bundle which is emitted by the LED light source 63 is reflected by a mirror or the like so as to be directed to the liquid crystal panel 62 or the like, and a structure in which the optical axis of the illumination unit and the above described rotation axis are orthogonal (non-parallel), it is possible to make the device thinner, and moreover it is possible to implement a device with which the picture quality does not deteriorate due to rotation.

Even further, it would also be acceptable to provide a structure in which the projection lens is fixed to the body, and the portions other than the projection lens unit (i.e. the liquid crystal panel and the LED light source unit) are rotated. Or, it would also be acceptable to provide a structure in which the projection lens and the LED light source unit are fixed to the body, and the other portions are rotated. If such a structure is used, it is possible to reduce the weight of the rotation unit; for example, if manual rotation is performed by manually actuating an actuation member which is provided upon the surface opposite to the surface on which the compact foot portion 21 is provided, then rotation can be performed with only a small force. Furthermore, even in the case of rotation by electrical operation, it is possible to make the drive unit (i.e. the motor) more compact, and it is accordingly possible to make the device more compact. It should be understood that, with this type of rotation as well, the relative positional relationship between the liquid crystal panel, the LED light source, and the projection lens is preserved. In the various formats explained in the above description, if it is arranged for the portion which is rotated not to be exposed at the exterior of the device, then it becomes impossible for a foreign body or the like to become involved with the rotating portion from outside of the device body during rotation, or at least the possibility of this happening is reduced. By the structure which is not exposed, is meant a situation in which the projector module 6, the display section 2, and the rotating and sliding unit are not exposed to the exterior; for example, a situation in which the projector module 6 is rotated within the display section 2, and the portion which emits the projected image is covered over with a transparent member.

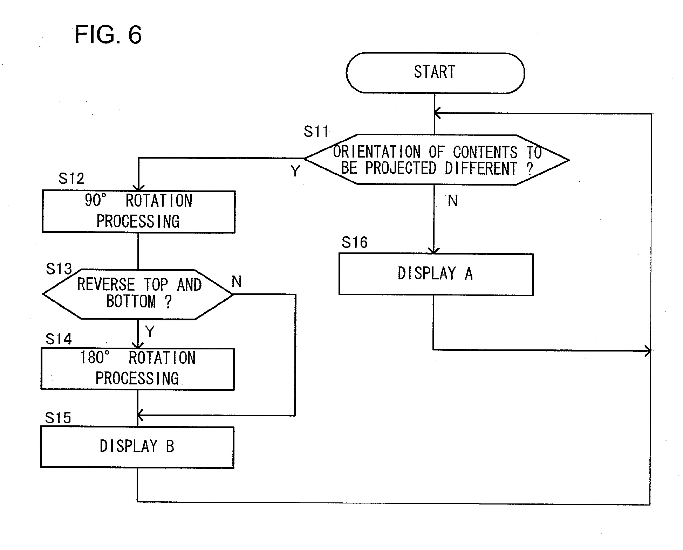

Fig. 6 is a flow chart for explanation of the processing flow for rotation by the projector module 6, performed by the CPU 101. The processing of Fig. 6 is started when the projector is used. In a step S11 of Fig. 6, the CPU 101 makes a decision as to whether or not the display format of the contents to be projected is different from the projection format in the placement position in the present condition of the device. In other words when, with the orientation in which the device is placed being, for example, placement in the vertical position as shown in Fig. 3(a), and in a state in which an attempt is being made to project a screen in landscape format from the projector module 6, the contents for projection is a screen in portrait format, or when, with the orientation in which the device is placed being, for example, placement in the horizontal position as shown in Fig. 4(a), and in a state in which an attempt is being made to project a screen in portrait format from the projector module 6, the contents for projection is a screen in landscape format, then the CPU 101 makes an affirmative decision in the step S11 and proceeds to the step S12; while, if the projection image Iv in Fig. 3 (a) or the projection image Ih in Fig. 4 (a) and the display format of the contents which an attempt is being made to project (i.e. a screen in portrait format or a screen in landscape format) are in agreement, then the CPU 101 makes a negative decision in the step S11 and proceeds to the step S16.

In the step S12, the CPU 101 drives the motor 207 and rotates the projector module 6 through 90°, and then proceeds to the step S13. In other words, in the case of the vertical position placement of Fig. 3(a) the projector module 6 is rotated through 90° in the rightwards direction shown in Fig. 1, while in the case of the horizontal position placement of Fig. 4(a) the projector module 6 is rotated through 90° in the leftwards direction shown in Fig. 1. It should be understood that, at this time, the relative positional relationship of the projection lens 61, the liquid crystal panel 62, and the LED light source 63 is kept fixed even though the projector module 6 is rotated, so that the projection image is not obstructed by the placement surface P of this portable telephone device with incorporated projector 10 due to the above described rotation. And, in the step S13, the CPU 101, which is a decision circuit, decides whether or not to reverse the display upon the screen which is to be projected top and bottom. If the CPU 101 has decided that the contents for projection is a photographic image, and that, based upon the top and bottom information during photography, the image should be reversed top and bottom, then it takes an affirmative decision in the step S13 and proceeds to the step S14. On the other hand, if the CPU has decided that the contents for projection is a photographic image, and that, based upon the top and bottom information during photography, the image should not be reversed top and bottom, then it takes a negative decision in the step S13 and proceeds to the step S15. It should be understood that, if it can be decided that the contents to be projected is data other than a photographic image, if the display format (a screen in portrait format or a screen in landscape format) in which it is to be projected can be decided upon, and if the proper up and down direction for the contents to be projected can be decided upon according to the header information or the like included in its data file, then the CPU performs the decision in the step S13 using this information.

In the step S14, the CPU 101 sends a command to the liquid crystal drive unit 65 so as to change the liquid crystal panel drive signal in order to rotate the image which is created upon the liquid crystal panel through 180°, and then proceeds to the step S15.

In the step S15, the CPU 101 performs a display B. In concrete terms, it sends a command to the LED drive unit 64 and lights up the LED light source 63, and then returns to the step S11. By doing this, in the state of Fig. 3(a) the projected image IvR is projected, while in the state of Fig. 4(a) the projected image IhL is projected.

And, in the step S16, the CPU 101 performs a display A. In concrete terms, it sends a command to the LED drive unit 64 and lights up the LED light source 63, and then returns to the step S11. By doing this, in the state of Fig. 3 (a) the projected image Iv is projected, while in the state of Fig. 4(a) the projected image Ih is projected. It should be understood that, according to requirements, it would also be acceptable to arrange to perform the same processing as the steps S13 and S14, between the steps S11 and S16.

Furthermore, when the CPU 101 is displaying the same information as the information which is being projected by the projector module 6, or text information as previously described, upon the main liquid crystal display unit 204, then it electrically rotates the display image which is being displayed upon the main liquid crystal display unit 204, so that the orientation of this image which is being displayed upon the main liquid crystal display unit 204 coincides with the orientation of the image which is being projected by the projector module 6.

According to the embodiment explained above, the following beneficial operational effects are obtained. (1) With this projector module 6 which is provided to the portable telephone device with incorporated projector 10, in the state in which this portable telephone device with incorporated projector 10 is placed in a vertical position (with the projection screen being a landscape format screen), along with the central point of the projection ray bundle being offset in the rightwards direction from the center O of the aperture of the projector module 6, the projected image Iv is projected at a position which is offset in the upwards direction from the center O of the aperture of the projector module 6 (Fig. 3). However, the rotation position of the projector module 6 is set to 0°. Accordingly the projected image Iv becomes easy to see, since no portion of the projected image is intercepted by the placement surface (the plane P).

(2) With the projector module 6 of (1) described above, if, from the state of being vertically placed in a vertical position, the portable telephone device with incorporated projector 10 is rotated in a plane substantially parallel to the projection surface through substantially 90° and is placed in a horizontal position (with the projection screen being a screen in portrait format), then, since the central point of the projection ray bundle comes to be in a state of being offset in the leftwards direction from the center O of the aperture of the projector module 6, and the projected image before the above rotation is offset in the opposite direction to the rotation, accordingly the projected image Ih is projected in a position which is offset in the upwards direction from the center O of the projector module 6 (Fig. 4). Therefore even if, from the state of Fig. 3(a), the offset amount is not changed but is kept just as it is, since no portion of the image Ih will interfere with the placement surface (the plane P), accordingly it is possible to obtain a projected image which is easy to view, irrespective of whether the portable telephone device with incorporated projector 10 is placed in a vertical position, or is placed in a horizontal position.

(3) Since keystone compensation is performed by image processing in order to compensate for trapezoidal deformation of the projected image which is generated by projecting the image with the above described offset, accordingly a projected image is obtained in which trapezoidal deformation originating in offset of the projection position is suppressed. It should be understood that, if the optical axis of the projection lens 61 is not perpendicular to the projection surface, then the trapezoidal deformation of the projected image is changed by rotation of the projected image (i.e. by rotation of the projector module 6, electrical rotation of the projected image data, or rotation due to placement in a vertical position or a horizontal position of the portable telephone with incorporated projector 10). It is preferred to employ a structure in which this deformation can be compensated to yet a further level by the CPU 101. Based upon actuation of the first actuation member 112 or of a remote control device not shown in the figures, the CPU 101 is able to change the compensation characteristics in the two states before and after the projected image has been rotated for compensation of this deformation (for example the state of placement in the vertical position and the state of placement in the horizontal position), so as to perform keystone compensation with different compensation characteristics.

(4) Since the compact foot portions 12a - 12d, 11, and 21 are provided to this portable telephone device with incorporated projector 10, accordingly, irrespective of whether the portable telephone device with incorporated projector 10 is placed in a vertical position or in a horizontal position, along with a stabilized and easy to view projected image being obtained, it is also possible for the operator simply and easily to ascertain the placement direction. For example, when the portable telephone device with incorporated projector 10 is placed in the horizontal position in the opposite direction to the direction shown in Fig. 4(a), then the projection images Ih, IhL shown in Fig. 4(a) will come to be intercepted by the plane P. According to this embodiment, this type of state of affairs can be prevented before it even happens.

(5) The projector module 6 is made as a cylinder, and is made so as to fit into and rotate freely in the hole M which is provided in the surface 2a of the display section 2 of the portable telephone device with incorporated projector 10. All of the LED light source 63, the liquid crystal panel 62, and the projection lens 61 are contained within the cylinder member 60. Since the liquid crystal panel 62 and the projection lens 61 rotate when the projector module 6 is rotated, accordingly the projected image also rotates, as shown in Figs. 3 (a) and 4(a). Therefore, even if contents for a screen in landscape format and contents for a screen in portrait format are mixed together for projection, the placement direction for the portable telephone device with incorporated projector 10 does not need to be changed for each of these different contents, and it is possible always to obtain an erect projected image.

(6) Since, for rotation of the projector module 6, it is decided (in the step S11) whether or not the display format of the contents, for example a screen in portrait format or a screen in landscape format or the like is different from the projection format in the placement position in the present state, and then the motor 207 is automatically rotated (in the step S12) if they are different, accordingly the convenience of use is enhanced. In particular, in the case of a mobile device such as this portable telephone device with incorporated projector 10, sometimes the projected image wobbles so that the viewer feels uncomfortable, since the portable telephone device with incorporated projector 10 can be moved even if it is only actuated with a finger. Accordingly, by automatically rotating the projector module 6, it is possible to prevent the projected image wobbling and the viewer becoming uncomfortable, because no structure is any longer required for actuation in order to rotate the projected image.

(7) Since the click mechanism is provided and has a total of three positions, i.e. the fundamental position of the projector module 6 (supposed to be at 0°) and two positions in which the projector module is rotated to orientations of 90° to the left and right with reference to this fundamental position, accordingly, if manual rotation of the projector module 6 is required, it becomes easy to perform this rotational actuation.

(8) Since it is arranged to make a decision (in the step S13) by using the top and bottom information as to whether or not to reverse the display which is to be projected vertically upon the screen top and bottom, and, if it is to be thus reversed, then to rotate the image which is being formed upon the liquid crystal panel 62 automatically through 180° (in the step S14), accordingly an erect image is always projected, irrespective of the orientation in which the photographer was holding the portable telephone device with incorporated projector 10 when performing photography. It should be understood that, in this case, the keystone compensation is also changed to match the above described rotation.

It would also be acceptable to increase the offset amount shown by way of example in Figs. 3 and 4. During placement in the vertical position, the lower edge of the projection ray bundle is projected as offset in the upwards direction from the center O of the aperture of the projector module 6, and moreover the left edge of the projection ray bundle is projected as offset in the rightwards direction from the center O of the aperture (during the projection of the image Iv of Fig. 3(a)). In other words, in each placement state, irrespective of the projection distance, the orientation of the projection ray bundle is determined so that the lower edge of the projection ray bundle lies above a surface parallel to the plane P (i.e. so that the orientation of the lower edge of the projection ray bundle towards the screen S faces in the same direction as a plane parallel to the plane P, or above it) . Since, if this is done, during placement in the horizontal position, the lower edge of the projection ray bundle above the projection surface is projected so as to be offset in the direction upwards from the center O of the aperture of the projector module 6 (more accurately, the lower edge of the projection ray bundle upon a surface which includes the principal point perpendicular to the optical axis of the projection lens 61), and also the right side of the projection ray bundle above the projection surface is projected so as to be offset in the leftwards direction from the center O of the aperture of the projector module 6(more accurately, the right edge of the projection ray bundle upon a surface which includes the principal point perpendicular to the optical axis of the projection lens 61), accordingly, if the distance from this portable telephone device with incorporated projector 10 to the screen S is remote, or the like, still, no part of the projection ray bundle comes to be obstructed by the placement surface P due to this great distance to the screen S. When employing a structure in which the offset amount can be varied, it is desirable for this state to be set as the default state.

Although the above explanation has been in terms of the lens shift amount which determines the offset amount described above being stored as an initial compensation value in the CPU 101, and lens shifting being performed based upon this initial compensation value, it would also be acceptable to fix the positional relationship of the optical system (i.e. of the projection lens 61, the liquid crystal panel 62, and the LED light source 63) so as to obtain a placement offset predetermined in advance. Furthermore, at this time, it would be acceptable to arrange for the compensation for the trapezoidal deformation of the projection image which is generated to be performed electrically by image processing, or for it to be performed optically by compensation with an optical element.

Although it was further arranged for the CPU 101 automatically to reverse the image created upon the liquid crystal panel 62 top and bottom by using the top and bottom information set during photography, it would also be acceptable to provide a structure in which the top and bottom of the image created upon the liquid crystal panel 62 were reversed according to an actuation signal which is received from an actuation member (the first actuation member 112 or the second actuation member 205), or which is received via the short distance communication unit 104.

It was arranged for the CPU 101 to drive the motor 207 automatically so as to rotate the projector module 6, by using the top and bottom information set during photography. Apart from this, it would also be acceptable to arrange to perform this rotation according to the type of contents to be projected: for example by, according to the type of projection contents, projecting an image received from a television broadcast as a screen in landscape format, while projecting a normal display screen of a portable telephone (including an email display screen) as a screen in portrait format.

Furthermore, it would also be acceptable to perform the changeover between projection of a screen in landscape format, and projection of a screen in portrait format, when it has been detected that this portable telephone device with incorporated projector 10 has been set into a cradle which is connected to a computer. When the portable telephone device with incorporated projector 10 is set into the cradle, for example, it may be set automatically to project a screen in landscape format, and image data which has been inputted from the computer is projected by the projector module 6 in the same display format as upon the monitor device of the computer (for example as a screen in landscape format). At this time, it would also be acceptable to perform the changing over between projection of a screen in landscape format, and of a screen in portrait format, based upon a control signal from the computer. With the structure described above, it would also be possible to perform the same operation when the portable telephone device with incorporated projector 10 is connected to a computer, not via a cradle. In other words, if the portable telephone device is connected to the computer not via the cradle, then the start of this connection or communication may be detected by the CPU 101, and if, for example, a screen in portrait format is to be projected during placement of the device in the horizontal position of Fig. 4 (a), the projected image is rotated so as to be projected in landscape format by a method like the one described above, or by a method by data processing as described hereinafter, in the same manner as when the device is placed in the cradle.

It would also be acceptable to omit the motor 207 for rotationally driving the projector module 6. In this case, the projector module 6 is rotated by manual rotational actuation by the user.

### Rotation of the projected image by data processing

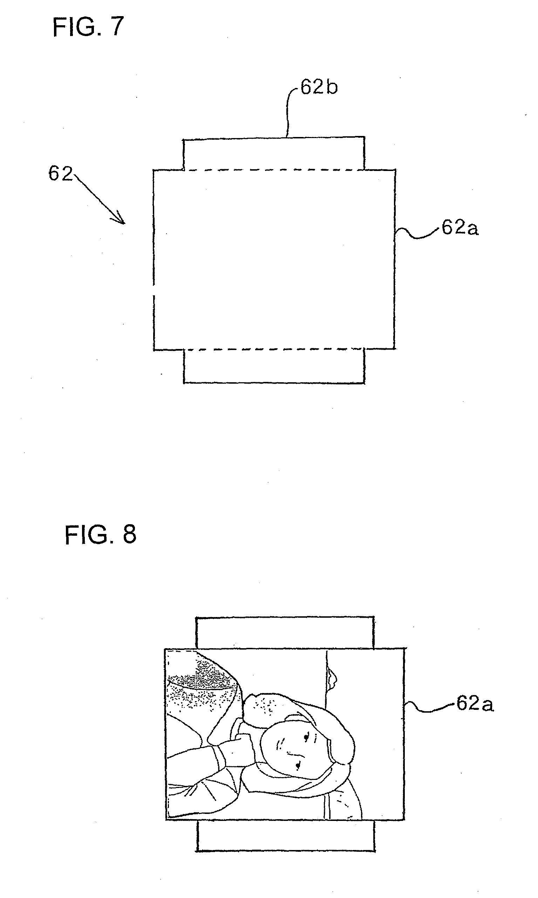

It would also be acceptable not to rotate the projector module 6, but rather to rotate the projected image electronically by performing processing upon the image data. In the embodiment described above, it was arranged for it to be decided by the CPU 101 (in the step S11) whether or not the display format for the contents is different from the projection format in the current placement position, and, if they are different, then it was arranged to rotate the projector module 6 with the motor 207 (in the step S12). Instead of the above, the image projected upon the screen S may be rotated electrically by rotating the image which is created upon the liquid crystal panel 62 through 90°. Fig. 7 is a figure for explanation of the structure of the liquid crystal panel 62 in this case. In Fig. 7, the liquid crystal panel 62 is shaped in the form of a cross, with a rectangle 62a in landscape format having an aspect ratio of 4:3 and a rectangle 62b in portrait format having an aspect ratio of 3:4. If the contents for projection is a screen in landscape format, then the CPU 101 creates an image in the region of the rectangle 62a of the liquid crystal panel 62, while, if the contents for projection is a screen in portrait format, then the CPU 101 creates an image in the region of the rectangle 62b of the liquid crystal panel 62.

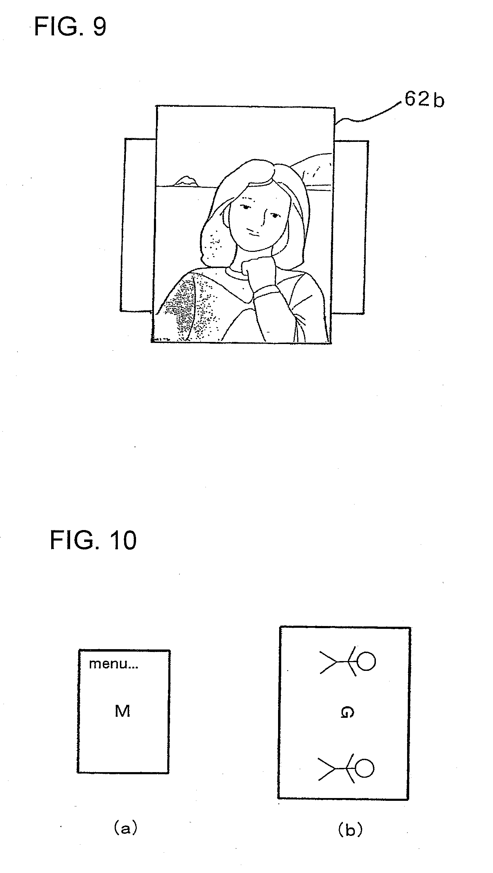

Fig. 8 is a figure for explanation of an example in which an image which is a portrait format screen is formed upon the area of a landscape format rectangle 62a. When, based upon the top and bottom information in the image data file, the CPU 101 decides that the image shown in Fig. 8 is a screen in portrait format, then it applies voltages to the liquid crystal panel 62 while rearranging the vertical and horizontal order of the columns of picture elements. By doing this an image of a screen in portrait format is created upon the liquid crystal panel 62 as shown in Fig. 9, and, as a result, the projected image is rotated. Since, by making the liquid crystal panel 62 in the shape of a cross, the number of picture elements does not change between Figs. 8 and 9, accordingly it is possible to obtain a projected image of an equal area without changing the resolution. Moreover, it is not necessary to perform shrinkage processing at a ratio of 3/4 upon the number of picture elements which make up each row of the image created upon the liquid crystal panel, as would be the case for a liquid crystal panel 62 shaped as the rectangle 62a, and accordingly it is possible to alleviate the burden upon the CPU 101.

It should be understood that, instead of making the liquid crystal panel 62 in the shape of a cross, it would of course also be acceptable to make it in a square shape which includes such a cross shape. Figs. 10 (a) and 10 (b) are figures respectively showing an image which is being displayed upon the main liquid crystal display unit 204 in the state of Fig. 3(a), and an image which is being projected upon the screen S. In the screen of the main liquid crystal display unit 204 shown in Fig. 10 (a), a menu M is being displayed upon in the upright state, while, in the screen S shown in Fig. 10(b), an image G, for example, is being displayed as a screen in portrait format rotatedthrough 90° in the rightwards direction from the upright state. In this type of case, the CPU 101 applies voltages to the liquid crystal panel 62 so that the orientation of the image being displayed upon the liquid crystal panel 62 comes to be in the upright state upon the screen S, and thus changes the order of the picture element columns, thereby rotating the image electrically through 90°. Due to this, it is possible to make the orientation of the image which is being displayed upon the main liquid crystal display unit 204 and the orientation of the image which is being projected upon the screen S match one another, both being in the upright state. It should be understood that, instead of rotating the image which is formed upon the liquid crystal panel 62 through 90°, it would also be acceptable to provide control by the CPU 101, so as to rotate the projector module 6 through 90° in the rightwards direction as shown in Fig. 1.

Furthermore, in this type of case, it would also be acceptable to change from the state in which the portable telephone device with incorporated projector 10 is placed in the vertical position of Fig. 3(a) to the state in which it is placed in the horizontal position of Fig. 4(a). By doing this, the image which is being projected upon the screen S comes to be in an upright state. However, in this case, the image which is being displayed upon the main liquid crystal display unit 204 also comes to be rotated through 90° in the leftwards direction upon the drawing paper of Fig. 10 from its upright state. The CPU 101 changes the order of the picture element columns of the menu M which is supplied to the main liquid crystal display unit 204, so that the image which is being displayed upon the main liquid crystal display unit 204 and the image which is projected upon the screen S agree in their orientation, and rotates the displayed image electrically through 90° in the rightwards direction upon the drawing paper of Fig. 10. By doing this, it is possible to make the orientation of the image which is being displayed upon the main liquid crystal display unit 204 and the orientation of the image which is projected upon the screen S coincide with one another, both being in an upright state.

In this manner, the image projected by the projector module 6 and the image displayed by the main liquid crystal display unit 204 are rotated according to the placement orientation (the method of placement) of the portable telephone device with incorporated projector 10. Furthermore, at this time, as previously described, they are also rotated according to the type of information which is to be displayed, such as a screen in portrait format or a screen in landscape format or the like. By providing this type of structure, it is possible to make the orientation of the image which is being displayed upon the main liquid crystal display unit 204 and the orientation of the image which is projected upon the screen S coincide with one another, both being in an upright state.

Although, as an example of the structure of the projector module 6, a case has been explained in which the optical image formation element was made by using the liquid crystal panel 62, and the image upon the liquid crystal panel 62 was illuminated with light from the LED light source 63 so as to obtain an optical image, it would also be acceptable to provide a structure in which a self light emitting type optical image formation element is used. In this case, the optical image formation element consists of point light sources which correspond to picture elements arranged in the form of an array, and this optical image formation element generates an optical image by causing each of the picture elements to emit light of a luminance according to the image signal.

Although, in the above explanation, the projected image was projected in a position which was offset from the center O of the aperture of the projector module 6, with the present invention, it would also be acceptable not necessarily to provide such an offset. In this case, it would be sufficient to perform tilting adjustment, so that no part of the projected image interferes with the placement surface.

Although in the above description an example was explained in which the projector module 6 was fitted to the portable telephone device 10, it would also be acceptable to fit this projector module to an electronic device such as a notebook type personal computer, a PDA, an electronic camera, a replay device, or the like, instead of to the portable telephone device with incorporated projector 10.
The shape of the electronic device to which the projector module 6 is fitted is not limited to being the folding shape described above; it would also be acceptable for this device to have a so called rectangular parallelepiped shape.

Although, in the above description, various embodiments and variant embodiments have been explained, the present invention is not to be considered as being limited by the contents thereof. Other modes which are considered to lie within the range of the technical concept of the present invention are also included within its scope.

The disclosures of the following applications on which priority is claimed are hereby incorporated by reference: JapanesePatentApplication2004-271786 (filed on 17 September 2004); and
Japanese Patent Application 2004-271788 (filed on 17 September 2004) .

## Claims

1. An electronic device, comprising:
a projector device that projects an image formed by an optical image formation element via a projection optical system towards a projection surface external to a body of the electronic device, wherein:
the projector device projects the image while determining an orientation of a projection light flux, so that neither in a first placement method, in which the electronic device is placed with a first surface of the bodybeing downwards upon a plane upon which the electronic device and the projection surface are placed, nor in a second placement method in which the electronic device is placed with a second surface of the body that is different from the first surface being downwards, is the image projected from the projector device intercepted by the plane.

2. An electronic device according to Claim 1, wherein:
the orientation of the projection light flux is determined so that, both in the first placement method and in the second placement method, a center line of the projection light flux faces upward relative to a surface parallel to the plane.

3. An electronic device according to Claim 1, wherein:
the orientation of the projection light flux is determined so that an edge portion of the projection light flux does not protrude from either the first surface or the second surface of the electronic device.

4. An electronic device according to Claim 1, wherein:
the orientation of the projection light flux is determined so that, both in the first placement method and in the second placement method, an orientation of projection towards the projection surface of a lower edge of the projection light flux faces in the same direction as a surface parallel to the plane, or above the direction.

5. An electronic device according to Claim 1, wherein:
the orientation of the projection light flux is determined so that, when the projector device has projected the image towards the projection surface that is disposed within a range of projection distance in which a focal state of the image upon the projection surface is kept appropriate, both in the first placement method and in the second placement method, the image is not intercepted by the plane, irrespective of a position of arrangement of the projection surface within the range.

6. An electronic device according to Claim 1, wherein:
the orientation of the projection light flux is determined so that, when the projector device has projected the image upon the projection surface that is disposed at a position within a range in which a focal state of the image upon the projection surface is kept appropriate, and at a maximum projection distance, both in the first placement method and in the second placement method, the image is not intercepted by the plane.

7. An electronic device according to Claim 1, further comprising:
an actuation member that adjusts the orientation of the projection light flux, and wherein:
both in the first placement method and in the second placement method, the orientation of the projection light flux
in which the image projected from the projector device is not intercepted by the plane, is a default state.

8. An electronic device according to any one of Claims 1 through 7, further comprising:
a correction unit that, both in the first placement method and in the second placement method, corrects trapezoidal deformation upon the projection surface of the image projected from the projector device with the same correction characteristics.

9. An electronic device according to Claim 8, wherein:
the correction unit further performs correction by varying the correction characteristics for trapezoidal deformation upon the projection surface, so that, in the first placement method and in the second placement method, the correction characteristics become different.

10. An electronic device according to any one of Claims 1 through 9, wherein:
members that face downwards during the placement are provided to both the first surface and the second surface.

11. An electronic device according to any one of Claims 1 through 10, wherein:
at least the optical image formation element is adapted so as to be able to rotate about an axis which is substantially parallel to an optical axis of a projection optical system.

12. An electronic device according to Claim 11, further comprising:
a rotation drive unit which rotationally drives at least the optical image formation element, according to a type of information to be projected and the placement method for the electronic device.

13. An electronic device according to any one of Claims 1 through 10, further comprising:
a projected image rotation unit which forms an image whose orientation has been rotated by the optical image formation element; and wherein:
the projected image rotation unit rotates the orientation of the image according to at least either one of a type of information to be projected, and the placement method for the electronic device.

14. An electronic device according to any one of Claims 1 through 10, further comprising:
a display device of which a display surface is arranged upon the body of the electronic device; and
at least one of a projected image rotation unit that has the optical image formation element form an image with an orientation of the image rotated, and a displayed image rotation unit that displays an image on the display device with an orientation of the image rotated.

15. An electronic device having a body comprising:
a projector device fitted to the body, which projects an image formed by an optical image formation element towards a projection surface external to the body via a projection optical system; wherein:
the projector device is adapted to be able, in a state
in which the body is placed upon a placement surface, to rotate around an axis that is substantially parallel to an optical axis of the projection optical system.

16. An electronic device according to Claim 15, wherein:
the projector device is adapted to be capable of rotating in different directions around the substantially parallel axis.

17. An electronic device according to Claim 15, wherein:
the projector device further comprises a LED light source that has an illumination optical axis that is non-parallel to a rotation axis, and that illuminates an image formed upon the optical image formation element.

18. An electronic device according to Claim 15, further comprising:
a rotation drive unit which rotationally drives the projector device, according to at least one of a type of information to be projected and an orientation in which the electronic device is placed.

19. An electronic device according to Claim 12 or Claim 18, further comprising:
a display device of which a display surface is provided upon the body of the electronic device; and wherein:
the rotation drive unit rotationally drives the optical image formation device or the projector device, so as to make an orientation of the image projected by the projector device and an orientation of the image displayed by the display device coincide with one another.

20. An electronic device, comprising:
a projector device that projects an image formed by an optical image formation element upon a projection surface;
a display device of which a display surface is arranged upon a body of the electronic device; and
at least one of a projected image rotation unit that electrically rotates an orientation of the image formed by the optical image formation element, and a displayed image rotation unit that electrically rotates an orientation of an image formed by the display device.

21. An electronic device according to Claim 14 or Claim 20, wherein:
at least one of the projected image rotation unit and the displayed image rotation unit rotates an image formed by the optical image formation element, or an image formed by the display device, according to a type of information to be displayed by the projector device or by the display device, and an orientation in which the electronic device is placed.

22. An electronic device according to Claim 14 or Claim 20, wherein:
at least one of the projected image rotation unit and the displayed image rotation unit rotates an image formed by the optical image formation element, or an image formed by the display device, so as to make an orientation of the image projected by the projector device and an orientation of the image displayed by the projector device coincide with one another.
